# EUROPEAN PATENT APPLICATION

(11) **EP 4 610 076 A1**
(43) Date of publication of application: **03.09.2025**
(21) Application number: 23893763.5
(22) Date of filing: 20.11.2023
(51) Int. Cl.: B60J 1/00

(54) **VEHICLE WINDOW MODULE AND VEHICLE**

(30) Priority: 21.11.2022 CN 202211452423
(71) Applicant: Fuyao Glass Industry Group Co., Ltd., Fuqing, Fujian 350300 (CN)
(72) Inventor: YE, Yunxiang, Fuqing, Fujian 350300 (CN); WANG, Zhixin, Fuqing, Fujian 350300 (CN); YE, Jiarong, Fuqing, Fujian 350300 (CN); LIN, Shengye, Fuqing, Fujian 350300 (CN); YAN, Jiankun, Fuqing, Fujian 350300 (CN)
(74) Representative: Inchingalo, Simona
(86) International application number: PCT/CN2023/132531
(87) International publication number: WO 2024/109673

(57) **Abstract**

The present application discloses a vehicle window module and a vehicle, comprising a light source assembly, a window assembly and a light extraction structure (300); the window assembly comprises first glass (210), second glass (220) and a first membrane (232), the first membrane (232) being stacked between the first glass (210) and the second glass (220), and the second glass (220) being positioned at a first side of the vehicle window module; the first glass (210) is provided with a first surface (212), the first surface (212) being positioned at a side of the first glass (210) distant from the second glass (220); the second glass (220) is provided with a second surface (222), the second surface (222) being positioned at a side of the second glass (220) distant from the first glass (210); the light source assembly is packaged in the first glass (210) or the second glass (220), the light source assembly being positioned between the first surface (212) and the second surface (222) in a thickness direction of the first glass (210); the light extraction structure (300) is disposed on the window assembly, and light emitted by the light source assembly may be emitted towards the first side of the vehicle window module or a second side opposite to the first side by means of the light extraction structure (300). The light source assembly is located between the first surface (212) and the second surface (222), and whether the vehicle window module is provided with a light source does not result in any difference in appearance.

## Description

### CROSS-REFERENCE TO RELATED APPLICATIONS

The present application claims priority to Chinese patent application No. 2022114524238, entitled "VEHICLE WINDOW MODULE AND VEHICLE", filed with the China National Intellectual Property Administration on November 21, 2022, the content of which is hereby incorporated by reference in its entirety.

### TECHNICAL FIELD

The present application relates to the technical field of vehicle accessories, particularly to a vehicle window module and a vehicle.

### BACKGROUND

To create a comfortable and safe driving atmosphere, a light source assembly is typically installed on the vehicle window module of a vehicle to form an ambient light, which improves the environment in the vehicle through preset lighting patterns.

The vehicle window module typically includes a window assembly, a light source assembly, and a light extracting structure. Both the light source assembly and the light extracting structure are installed on the window assembly. The light source assembly emits light, which is then emitted through the light extracting structure, so as to create driving atmosphere in the vehicle through preset patterns.

However, not all types of vehicles are equipped with ambient lights. For example, high-configuration vehicles may be equipped with ambient lights, while low-configuration vehicles may not be equipped with ambient lights. This leads to structural and spatial differences in the window modules of different vehicle configurations, which makes it difficult to meet the requirement for non-differentiation appearance among different vehicle configurations and is not conducive to the standardized structural layout of vehicles.

### SUMMARY

Accordingly, to address the issues of appearance differences between high-configuration and low-configuration vehicles in conventional vehicle window modules and the difficulty in achieving a uniform structural layout for vehicles, a vehicle window module and a vehicle are provided.

A technical solution is as follows:

According to one aspect, a vehicle window module is provided, including:
a light source assembly;
a window assembly including a first glass, a second glass, and a first film, wherein the first film is stacked between the first glass and the second glass, and the second glass is located on a first side of the vehicle window module;
wherein the first glass has a first surface located on a side of the first glass away from the second glass, the second glass has a second surface located on a side of the second glass away from the first glass, the light source assembly is encapsulated onto the first glass or the second glass, and the light source assembly is located between the first surface and the second surface in a thickness direction of the first glass; and
a light extracting structure provided on the window assembly, wherein light emitted by the light source assembly is capable of emitting toward the first side of the vehicle window module or a second side opposite to the first side through the light extracting structure.

The technical solution is further described below:

In one of the embodiments, in a planar direction of the first surface, an edge of the second glass is spaced apart from an edge of the first glass to form a mounting slot with an opening facing an inner side of the vehicle window module, and a part of the light source assembly is located in the mounting slot.

In one of the embodiments, the window assembly further includes a filling member, the filling member is matched with the mounting slot and is filled in the mounting slot, and a part of the light source assembly is located between the first glass and the filling member.

In one of the embodiments, a material of the filling member is the same as a material of the first film.

In one of the embodiments, the first glass further has a third surface opposite to the first surface, the first surface or the third surface is provided with a first shielding layer, and the second surface is provided with a second shielding layer.

In one of the embodiments, the second glass further has a fourth surface opposite to the second surface, the light extracting structure is provided on the second surface, on the fourth surface, in an interior of the second glass, or on the first film;
wherein the light emitted by the light source assembly is transmitted in the second glass and/or the first film, and emits toward the second side of the vehicle window module through the light extracting structure.

In one of the embodiments, the second glass further has a fourth surface opposite to the second surface, the window assembly further includes a light guide film provided on the fourth surface and stacked between the first film and the second glass, and the light extracting structure is provided on the light guide film.

In one of the embodiments, when projected in the thickness direction of the first glass, a projection contour of an edge of the second glass at least partially overlaps with a projection contour of an edge of the first glass, and the light source assembly is located between the first glass and the second glass.

In one of the embodiments, the second glass further has a fourth surface opposite to the second surface, the light extracting structure is provided on the second surface, on the fourth surface, in the interior of the second glass, or on the first film;
wherein the light emitted by the light source assembly is transmitted in the second glass and/or the first film and emits toward the second side of the vehicle window module through the light extracting structure.

In one of the embodiments, the light source assembly comprises a circuit board and a light emitting member, the circuit board is fixed to the first glass or the second glass, and the light emitting member is provided on the circuit board.

In one of the embodiments, in a surface direction of the first film, the light emitting member is attached to the first film, and/or an end of the second glass is attached to the first film.

In one of the embodiments, at least a part of the circuit board is a flexible board, and at least a part of the flexible board extends outside the vehicle window module; and/or
the light source assembly further includes a first adhesive body, and at least a part of the circuit board is adhered to the first glass or the second glass by the first adhesive body.

In one of the embodiments, the vehicle window module further includes an encapsulation assembly provided at an edge portion of the window assembly.

In one of the embodiments, the vehicle window module further includes a second adhesive body, wherein the second adhesive body is provided on the second surface, and the second adhesive body is configured to adhere the vehicle window module to a vehicle body.

Another aspect further provides a vehicle, which includes the vehicle window module as described in any one of the above embodiments.

Details of one or more embodiments of the present application are set forth in the accompanying drawings and description below. Other features, objects, and advantages of the present application will become apparent from the description, drawings, and claims.

### BRIEF DESCRIPTION OF THE DRAWINGS

The accompanying drawings, which form a part of the present application, are provided to further understand the present application. Illustrative embodiments and descriptions thereof are provided to explain the present application and are not to be construed as unduly limiting the present application.

To illustrate the technical solutions of the present application more clearly, the drawings used in the present application will be briefly described below. Apparently, the drawings described below are merely for some embodiments of the present application. For those of ordinary skill in the art, other drawings can be obtained according to the disclosed drawings without any creative effort.

Additionally, the drawings are not drawn to a 1:1 scale, and the relative sizes of various components are depicted exemplarily in the drawings rather than to true scale.
FIG. 1 is a schematic structural view of a vehicle window module according to an embodiment of the present application.
FIG. 2 is a schematic structural view of a first vehicle window module including an encapsulation assembly according to an embodiment of the present application.
FIG. 3 is a schematic structural view of a second vehicle window module including an encapsulation assembly according to an embodiment of the present application.
FIG. 4 is a schematic structural view of a third vehicle window module including an encapsulation assembly according to an embodiment of the present application.
FIG. 5 is a schematic structural view of a vehicle window module according to another embodiment of the present application.
FIG. 6 is a schematic structural view of another arrangement of the vehicle window module in the example of FIG. 5.
FIG. 7 is a schematic structural view of yet another arrangement of the vehicle window module in the example of FIG. 5.

Reference signs:
110: light emitting member; 122: flexible board; 124: rigid board; 132: first adhesive body; 210: first glass; 212: first surface; 214: third surface; 220: second glass; 222: second surface; 224: fourth surface; 232: first film; 234: second film; 240: filling member; 250: mounting slot; 262: first shielding layer; 264: second shielding layer; 270: second adhesive body; 300: light extracting structure; 310: light guide film; 410: encapsulation member; 420: third adhesive body.

### DETAILED DESCRIPTION

The present application will be described in detail with reference to the accompanying drawings:
To make the objects, features and advantages of the present application more apparent and comprehensible, the specific embodiments of the present application will be described in detail with reference to the accompanying drawings. Numerous specific details are set forth in the following description to facilitate a thorough understanding of the present application. However, it should be noted that the present application can be implemented in many other ways different from those described herein. Those skilled in the art can make similar improvements without departing from the scope of the present application. Therefore, the present application is not limited to the specific embodiments disclosed below.

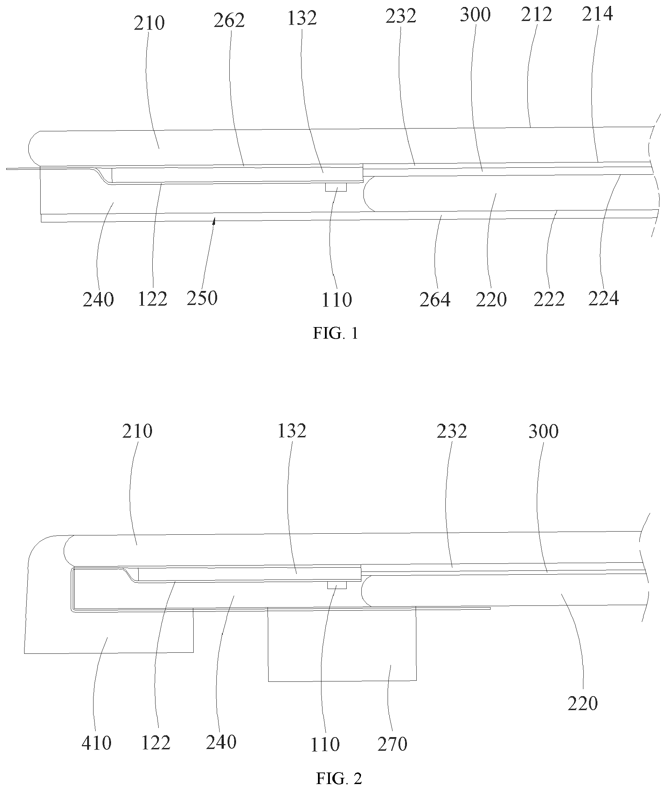

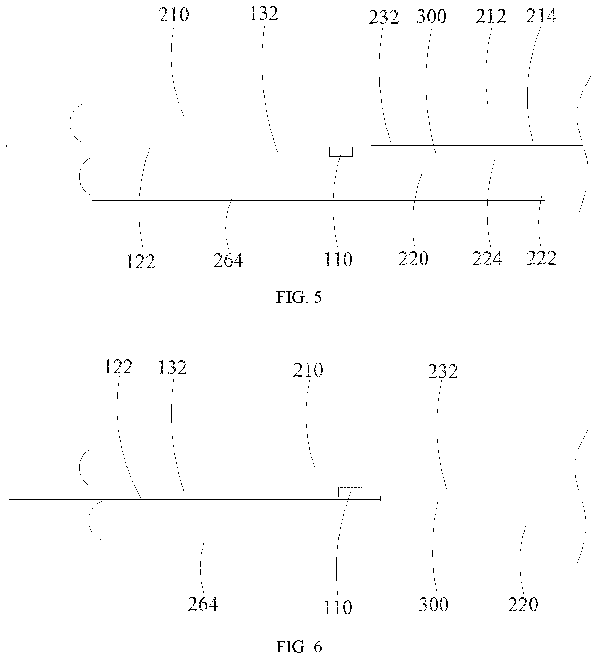

Referring to FIGs. 1 and 5, a vehicle window module is provided. The vehicle window module can be applied to the sunroof, side window, or front/rear windshield of a vehicle, and serves as an ambient light to create a driving atmosphere inside the vehicle. The vehicle window module includes a light source assembly, a window assembly, and a light extracting structure 300.

The light source assembly is configured to generate light, thus serving as a source for forming the ambient light.

As shown in FIGs. 1 and 5, the window assembly includes a first glass 210, a second glass 220, and a first film 232. The first film 232 is stacked between the first glass 210 and the second glass 220. The second glass 220 is located on a first side of the vehicle window module.

The first glass 210, the first film 232, and the second glass 220 are sequentially stacked to form a main body structure of the vehicle window. For example, the first film 232, as an interlayer film between the first glass 210 and the second glass 220, can be a PVB film (PolyVinyl Butyral Film), preventing the window assembly from scattering when breaking, and thereby improving the safety of the window assembly.

As shown in FIGs. 1 and 5, the first glass 210 has a first surface 212 located at a side of the first glass 210 away from the second glass 220. The second glass 220 has a second surface 222 located on a side of the second glass 220 away from the first glass 210. The light source assembly is encapsulated onto the first glass 210 or the second glass 220. In a thickness direction of the first glass 210, the light source assembly is located between the first surface 212 and the second surface 222.

For example, the light source assembly can first be fixed to the first glass 210 or the second glass 220, and then covered with the first film 232 to encapsulate light source assembly onto the first glass 210 or the second glass 220. Additionally, in the thickness direction (i.e., an up-down direction in FIG. 1) of the first glass 210, the light source assembly is located between the first surface 212 and the second surface 222. That is, the light source assembly does not protrude from the first glass 210 or the second glass 220. As such, no difference can be seen from the outer surface of the vehicle window module, regardless of whether the vehicle window module is equipped with the light source assembly or not, thus enabling a unified appearance requirements for both high-configuration and low-configuration without additional design costs.

The light extracting structure 300 is provided on the window assembly. Light emitted by the light source assembly can emit toward either the first side of the vehicle window module or the second side opposite to the first side through the light extracting structure 300.

The position of the light extracting structure 300 can be determined according to the selection of a light conducting layer. For example, the light extracting structure 300 can be provided in the second glass 220, or can also be provided on the second surface 222 or a fourth surface 224 of the second glass 220 (the fourth surface 224 refers to a surface of the second glass 220 towards the first glass 210), or on the surface of the first film 232 towards the second glass 220. Certainly, the light extracting structure 300 can be provided on the first glass 210. The light extracting structure 300 can be printed on the first glass 210 or the second glass 220, or can be a separate light guide film 310 disposed between the first glass 210 and the second glass 220, which is not limited herein.

For example, the light extracting structure 300 can be printed on the fourth surface 224 of the second glass 220. When light propagates within the second glass 220 and encounters the light extracting structure 300, the light extracting structure 300 reflects the light out of the second glass 220 toward the second side of the vehicle window module, thus creating an ambient lighting effect.

Optionally, the first side of the vehicle window module refers to a side of the vehicle window module facing an exterior of the vehicle. The second side of the vehicle window module refers to a side of the vehicle window module facing an interior of the vehicle. Depending on the desired effect of the ambient light, the light can emit toward the interior or exterior of the vehicle window module through the light extracting structure 300, with no specific limitation herein.

The vehicle window module can be applied to vehicles, including fuel-powered cars and electric vehicles. The light emitted by the light source assembly passes through the light extracting structure 300 and then is emitted from the second glass 220 towards a preset direction, e.g., toward the inside of the vehicle window module, thereby creating a preset lighting atmosphere inside the vehicle. The light source assembly is encapsulated onto the first glass 210 or the second glass 220, and is located between the first surface 212 and the second surface 222 in the thickness direction of the first glass 210. Therefore, there is no differentiation in appearance whether the light source assembly is provided or not, thus satisfying the requirements for non-differentiation across the high-configuration vehicle and the low-configuration vehicle, while eliminating the need for separate vehicle structure layouts for both the high-configuration vehicle and the low-configuration vehicle.

In an embodiment, referring to FIG. 1, in a planar direction of the first surface 212, an edge of the second glass 220 is spaced apart from an edge of the first glass 210, so as to form a mounting slot 250 with an opening facing an inner side of the vehicle window module. A part of the light source assembly is located in the mounting slot 250.

As shown in FIG. 1, the edge of the second glass 220 and the edge of the first glass 210 are misaligned, thus forming a gap between the edge of the second glass 220 and the edge of the first glass 210. The gap is the mounting slot 250, and a slot opening of the mounting slot 250 faces the interior of the vehicle window module. A part of the light source assembly can be provided in the mounting slot 250 to facilitate mounting the light source assembly.

In an embodiment, referring to FIG. 1, the window assembly further includes a filling member 240. The filling member 240 is matched with the mounting slot 250 and is filled in the mounting slot 250. A part of the light source assembly is located between the first glass 210 and the filling member 240.

The shape of the filling member 240 is exactly matched with the mounting slot 250 to fill the mounting slot 250, and the light source assembly is encapsulated onto the first glass 210 or the second glass 220 by the filling member 240, so that the overall appearance of the window assembly is more uniform and the light source is further encapsulated tightly.

In an embodiment, a material of the filling member 240 is the same as that of the first film 232.

The material of the filling member 240 is the same as that of the first film 232, so that the first film 232 can be directly used as the filling member 240 to fill the mounting slot 250, which makes it more convenient to obtain material.

Optionally, both the first film 232 and the filling member 240 are made of PVB films. During production, a pressing assembly can be performed using thermal pressing or other methods, thereby improving efficiency.

In an embodiment, referring to FIG. 1, the first glass 210 further has a third surface 214 opposite to the first surface 212. The first surface 212 or third surface 214 is provided with a first shielding layer 262. The second surface 222 is provided with a second shielding layer 264.

The first shielding layer 262 and the second shielding layer 264 are configured to prevent light from the light source assembly from emitting towards the interior or exterior of the vehicle window module, thereby avoiding light loss.

During implementation, the first surface 212 of the first glass 210 can be provided with the first shielding layer 262, and the second surface 222 of the second glass 220 can be provided with the second shielding layer. Alternatively, the third surface 214 of the first glass 210 can be provided with the first shielding layer 262, and the second surface 222 of the second glass 220 can be provided with the second shielding layer.

In an embodiment, referring to FIGs. 1 to 6, the second glass 220 further has a fourth surface 224 opposite to the second surface 222. The light extracting structure 300 is provided on the second surface 222, on the fourth surface 224, in the interior of the second glass 220, or on the first film 232.

The light emitted by the light source assembly is transmitted in the second glass 220 and/or the first film 232, and emits toward the second side of the vehicle window module through the light extracting structure 300.

For example, the light extracting structure 300 can be provided on the second surface 222, on the fourth surface 224, in the interior of the second glass 220, or on the first film 232 through printing, spraying, etching, or other processes.

During implementation, the position of the light extracting structure 300 can be determined based on the selection of the light transmission layer, while allowing the light emitted by the light source assembly to be transmitted through the corresponding light transmission layer and subsequently emitted.

Optionally, the first film 232 is made of materials with high refractivity, so as to meet the requirements for light transmission within the first film 232.

Optionally, both the first film 232 and the filling member 240 are made of materials with high refractivity to optimize the transmission path of the light emitted by the light source assembly.

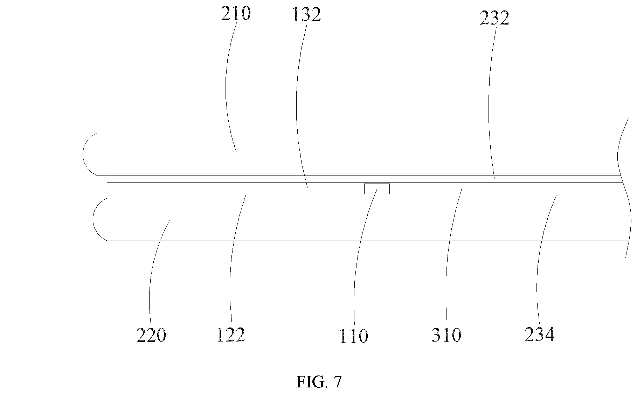

In an embodiment, referring to FIG. 7, the second glass 220 further has a fourth surface 224 opposite to the second surface 222. The window assembly further includes a light guide film 310. The light guide film 310 is provided on the fourth surface 224 and stacked between the first film 232 and the second glass 220. The light extracting structure 300 is provided on the light guide film 310.

In the embodiment shown in FIG. 7, the window assembly further includes a light guide film 310 located between the first film 232 and the second glass 220. The light extracting structure 300 is provided on the light guide film 310, rather than on the second glass 220 or the first film 232. The light emitted by the light source assembly is transmitted in the light guide film 310, and then is emitted toward the second side of the vehicle window module after being processed by the light extracting structure 300.

Optionally, a second film 234 is further provided between the first glass 210 and the second glass 220. The second film 234 is located between the light guide film 310 and the second glass 220. The first glass 210, the first film 232, the light guide film 310, the second film 234, and the second glass 220 are sequentially stacked, so that bonding of the structural components of the vehicle window module is more stable. In this case, there is no need to print patterns on the first glass 210 or the second glass 220, thus making the process more convenient.

Certainly, in some other embodiments, the second film 234 can also be located between the first film 232 and the light guide film 310. In this case, the first glass 210, the first film 232, the second film 234, the light guide film 310, and the second glass 220 are sequentially stacked.

In an embodiment, referring to FIGs. 5 to 7, when projected in the thickness direction of the first glass 210, a projection contour of the edge of the second glass 220 at least partially overlaps with a projection contour of the edge of the first glass 210. The light source assembly is located between the first glass 210 and the second glass 220.

Since the projection contour of the edge of the first glass 210 at least partially overlaps with the projection contour of the edge of the second glass 220, there is no gap (i.e., no mounting slot 250) in the overlapping portion. In this case, the light source assembly can be directly encapsulated between the first glass 210 and the second glass 220. As such, there is no differentiation in the appearance of the vehicle window module, regardless of whether the light source assembly is provided or not.

Optionally, the size of the first glass 210 is the same as that of the second glass 220. When projected in the thickness direction of the first glass 210, the projection contour of the edge of the second glass 220 completely overlaps with the projection contour of the edge of the first glass 210. The light source assembly can be directly adhered to the edge region of the first glass 210 or to the edge region of the second glass 220.

It should be noted:
In the case that the size of the first glass 210 is the same as that of the second glass 220, when projected in the thickness direction of the first glass 210, the projection contour of the edge of the second glass 220 completely overlaps with the projection contour of the edge of the first glass 210. The "overlap" used herein is not absolute overlapping, and deviations within an expected range are permissible due to manufacturing, assembly, and other practical processes, which will not be further elaborated.

In an embodiment, the second glass 220 further has a fourth surface 224 opposite to the second surface 222. The light extracting structure 300 is provided on the second surface 222, on the fourth surface 224, in the interior of the second glass 220, or on the first film 232. The light emitted by the light source assembly is transmitted in the second glass 220 and/or the first film 232 and emits toward the second side of the vehicle window module through the light extracting structure 300.

During implementation, the position of the light extracting structure 300 can be determined based on the selection of the light transmission layer, while allowing the light emitted by the light source assembly to be transmitted through the corresponding light transmission layer and subsequently emitted.

In an embodiment, the light source assembly includes a circuit board and a light emitting member 110. The circuit board is fixed to the first glass 210 or the second glass 220, and the light emitting member 110 is provided on the circuit board.

The light emitting member 110 is provided on the circuit board, so that the light emitting member 110 can be controlled by the circuit board to emit light or not emit light. The circuit board is electrically connected to an external control system, e.g., the CPU of the vehicle, to receive corresponding operational commands.

Optionally, the circuit board is a Printed Circuit Board Assembly (PCBA), and the light emitting member 110 is an LED bead.

In an embodiment, in the surface direction of the first film 232, the light emitting member 110 is attached to the first film 232, and/or an end of the second glass 220 is attached to the first film 232.

For example, the edge of the light emitting member 110 is attached to the edge of the first film 232, and the edge of the second glass 220's end is also attached to the edge of the first film 232, ensuring a more compact structure and a shorter light transmission path.

In an embodiment, at least a part of the circuit board is a flexible board 122, and at least a part of the flexible board 122 extends outside the vehicle window module.

As shown in FIG. 2, the entire circuit board is a flexible PCBA, and the light emitting member 110 is provided on the flexible PCBA.

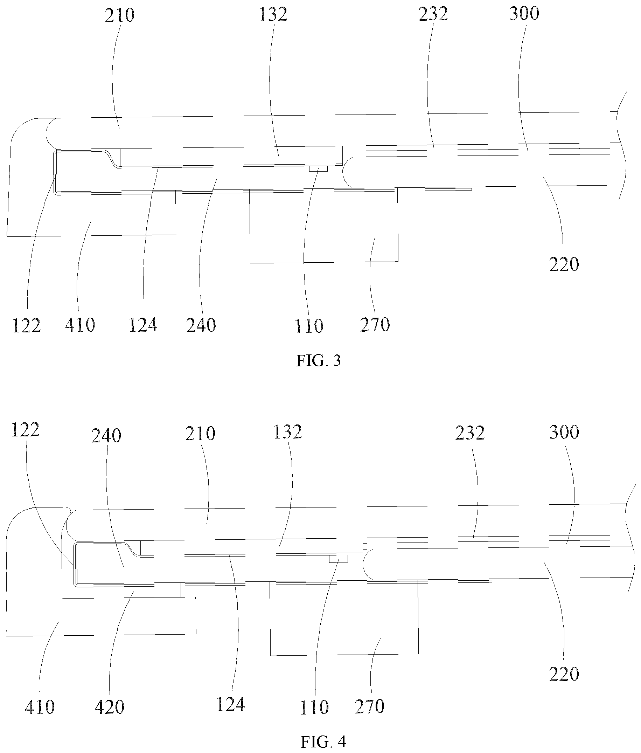

As shown in FIG. 3, a portion of the circuit board is a rigid PCBA, another portion is the flexible PCBA. The flexible PCBA is connected to and extends outside the rigid PCBA to facilitate electrical connection with other vehicle components. The light emitting member 110 is provided on the rigid PCBA.

As shown in FIG. 5, the light emitting member 110 is provided on the side of the circuit board towards the second glass 220. As shown in FIG. 6, the light emitting member 110 is provided on the side of the circuit board towards the first glass 210. These two configurations can be selected based on actual layout requirements.

In an embodiment, referring to FIGs. 1 and 5, the light source assembly further includes a first adhesive body 132. At least a part of the circuit board is adhered to the first glass 210 or the second glass 220 by the first adhesive body 132.

The first adhesive body 132 is configured to adhere the circuit board to the first glass 210 or the second glass 220, thus facilitating the encapsulation process of the light source assembly and the window assembly.

In an embodiment, referring to FIGs. 2 to 4, the vehicle window module further includes an encapsulation assembly provided at an edge portion of the window assembly.

The encapsulation assembly is configured to encapsulate the edge regions of the first glass 210 and the second glass 220, so that the modularity degree of the vehicle window module is relatively high and the edges of the first glass 210 and the second glass 220 can be protected from damage.

Optionally, as shown in FIGs. 2 and 3, the encapsulation assembly includes an encapsulation component 410. The encapsulation component 410 is provided in an essentially curved shape. The edges of the first glass 210 and the filling member 240 abut against the encapsulation component 410.

Optionally, the encapsulation assembly further includes a third adhesive body 420. The third adhesive body 420 is configured to adhere and fix the encapsulation component 410 to the filling member 240 for a more secure connection.

In an embodiment, referring to FIGs. 2 to 4, the vehicle window module further includes a second adhesive body 270. The second adhesive body 270 is provided on the second surface 222. The second adhesive body 270 is configured to adhere the vehicle window module to the vehicle body.

As shown in FIGs. 2 to 4, the second adhesive body 270 is adhered to the second glass 220 and/or the filling member 240, so that during assembly of the vehicle window module, the second adhesive body 270 further is adhered to structures such as the groove walls of the vehicle body, improving assembly convenience.

On the other hand, the present application also provides a vehicle, which includes the vehicle window module as described in any one of the above embodiments.

The vehicle can be a fuel-powered car or an electric vehicle. The vehicle adopts the above-described vehicle window module. The light emitted by the light source assembly passes through the light extracting structure 300 and then is emitted from the second glass 220 towards a preset direction, e.g., towards the inside of the vehicle window module, thereby creating a preset lighting atmosphere inside the vehicle. The light source assembly is encapsulated onto the first glass 210 or the second glass 220, and located between the first surface 212 and the second surface 222 in the thickness direction of the first glass 210. Therefore, there is no differentiation in appearance whether the light source assembly is installed or not, thus satisfying the requirements for non-differentiation across the high-configuration vehicle and the low-configuration vehicle, while eliminating the need for separate vehicle structure layouts for both the high-configuration vehicle and the low-configuration vehicle.

In the description of the present application, it should be understood that, the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application.

In addition, the terms "first" and "second" are used for descriptive purposes only, and cannot be construed as indicating or implying a relative importance, or implicitly specifying the number of the indicated technical features. Thus, the quantity of the feature defined with "first" or "second" may explicitly or implicitly be at least one. In the description of the present application, "a plurality of" means at least two, such as two, three, unless otherwise defined explicitly and specifically.

In the present application, unless otherwise specified and defined explicitly, the terms "install", "connect", "join", and "fix" should be interpreted in a broad sense. For example, unless otherwise defined explicitly, they may refer to a fixed connection, a detachable connection, or an integral connection, may refer to a mechanical connection or an electrical connection, and may refer to a direct connection, an indirect connection via an intermediate medium, an internal communication between two elements, or interaction between two elements. The specific meanings of these terms in the present application can be understood based on specific circumstances by those of ordinary skills in the art.

In the present application, unless otherwise specified and defined explicitly, a first feature, when expressed as being "on" or "under" a second feature, may be in direct contact with the second feature or in indirect contact with the second feature via an intermediate medium. Furthermore, a first feature, when expressed as being "over", "above" or "on top of" a second feature, may be located right above or obliquely above the second feature, or only located at a level higher than that of the second feature. A first feature, when expressed as being "below", "underneath" or "under" a second feature, may be located right below or obliquely below the second feature, or only located at a level lower than that of the second feature.

It should be noted that when an element is referred to as being "fixed to" or "arranged on" another element, it may be directly disposed on the other element or an intermediate element may exist. When an element is considered to be "connected to" another element, it may be directly connected to the other element or an intermediate element may coexist. The terms "vertical", "horizontal", "upper", "lower", "left", "right" and similar expressions used herein are only for illustrative purposes and are not intended to represent the only implementations.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection scope of the present application shall be defined by the appended claims.

## Claims

1. A vehicle window module, comprising:
a light source assembly;
a window assembly comprising a first glass, a second glass, and a first film, wherein the first film is stacked between the first glass and the second glass, and the second glass is located on a first side of the vehicle window module;
wherein the first glass has a first surface located on a side of the first glass away from the second glass, the second glass has a second surface located on a side of the second glass away from the first glass, the light source assembly is encapsulated onto the first glass or the second glass, and the light source assembly is located between the first surface and the second surface in a thickness direction of the first glass; and
a light extracting structure provided on the window assembly, wherein light emitted by the light source assembly is capable of emitting toward the first side of the vehicle window module or a second side opposite to the first side through the light extracting structure.

2. The vehicle window module according to claim 1, wherein in a planar direction of the first surface, an edge of the second glass is spaced apart from an edge of the first glass to form a mounting slot with an opening facing an inner side of the vehicle window module, and a part of the light source assembly is located in the mounting slot.

3. The vehicle window module according to claim 2, wherein the window assembly further comprises a filling member, the filling member is matched with the mounting slot and is filled in the mounting slot, and a part of the light source assembly is located between the first glass and the filling member.

4. The vehicle window module according to claim 3, wherein a material of the filling member is a same as a material of the first film.

5. The vehicle window module according to claim 3 or 4, wherein the first glass further has a third surface opposite to the first surface, the first surface or the third surface is provided with a first shielding layer, and the second surface is provided with a second shielding layer.

6. The vehicle window module according to any one of claims 3 to 5, wherein the second glass further has a fourth surface opposite to the second surface, the light extracting structure is provided on the second surface, on the fourth surface, in an interior of the second glass, or on the first film;
wherein the light emitted by the light source assembly is transmitted in the second glass and/or the first film, and emits toward the second side of the vehicle window module through the light extracting structure.

7. The vehicle window module according to any one of claims 3 to 6, wherein the second glass further has a fourth surface opposite to the second surface, the window assembly further comprises a light guide film provided on the fourth surface and stacked between the first film and the second glass, and the light extracting structure is provided on the light guide film.

8. The vehicle window module according to any one of claims 1 to 7, wherein when projected in the thickness direction of the first glass, a projection contour of an edge of the second glass at least partially overlaps with a projection contour of an edge of the first glass, and the light source assembly is located between the first glass and the second glass.

9. The vehicle window module according to claim 8, wherein the second glass further has a fourth surface opposite to the second surface, the light extracting structure is provided on the second surface, on the fourth surface, in the interior of the second glass, or on the first film;
wherein the light emitted by the light source assembly is transmitted in the second glass and/or the first film and emits toward the second side of the vehicle window module through the light extracting structure.

10. The vehicle window module according to any one of claims 1 to 9, wherein the light source assembly comprises a circuit board and a light emitting member, the circuit board is fixed to the first glass or the second glass, and the light emitting member is provided on the circuit board.

11. The vehicle window module according to claim 10, wherein in a surface direction of the first film, the light emitting member is attached to the first film, and/or an end of the second glass is attached to the first film.

12. The vehicle window module according to claim 10 or 11, wherein at least a part of the circuit board is a flexible board, and at least a part of the flexible board extends outside the vehicle window module; and/or
the light source assembly further comprises a first adhesive body, and at least a part of the circuit board is adhered to the first glass or the second glass by the first adhesive body.

13. The vehicle window module according to any one of claims 1 to 9, further comprising an encapsulation assembly provided at an edge portion of the window assembly.

14. The vehicle window module according to claim 13, further comprising a second adhesive body, wherein the second adhesive body is provided on the second surface, and the second adhesive body is configured to adhere the vehicle window module to a vehicle body.

15. A vehicle, comprising the vehicle window module according to any one of claims 1 to 14.
